Europäisches Patentamt

European Patent Office

Office européen des brevets

(11) Veröffentlichungsnummer: **0 151 778**
A2

(12) **EUROPÄISCHE PATENTANMELDUNG**

(21) Anmeldenummer: **84115938.7**

(22) Anmeldetag: **20.12.84**

(51) Int. Cl.⁴: **F 16 J 15/32**

(30) Priorität: **16.02.84 DE 3405513**

(43) Veröffentlichungstag der Anmeldung:
**21.08.85 Patentblatt 85/34**

(84) Benannte Vertragsstaaten:
**DE FR GB IT NL**

(71) Anmelder: **GOETZE AG**
**Bürgermeister-Schmidt-Strasse 17**
**D-5093 Burscheid 1(DE)**

(72) Erfinder: **Fritz, Erwin**
**Burscheider Strasse 385**
**D-5090 Leverkusen 3(DE)**

(54) Dichtung.

㊼ Eine Dichtung, die sich im wesentlichen aus einem abgestuften Gehäuse und einem damit verbundenen Dichtbereich zusammensetzt, weist im Bereich des abgestuften Gehäuseteiles eine separate, aus einem teilvernetzten Elastomerteil bestehende statische Abdichtung auf. Beim Einpreßvorgang wird das radial über den Gehäusedurchmesser hinausgehende Elastomermaterial in ein zwischen sich und der Stufe zum nächstgrößeren Durchmesser gebildeten Freiraum gedrückt.

FIG. 1

EP 0 151 778 A2

0151778

- 1 -

Dichtung.

Die Erfindung betrifft eine Dichtung, insbesondere eine radial oder axial wirkende Wellendichtung oder Stangendichtung, bestehend aus einem abgestuft ausgebildeten Gehäuse, einem damit verbundenen Dichtbereich sowie einer im Bereich des abgestuften Gehäuseteiles angeordneten statischen Abdichtung, die im Einbauzustand unter Vorspannung mit einem korrespondierenden Aufnahmekörper zusammenwirkt.

Durch das deutsche Gebrauchsmuster 18 27 236 ist bereits eine Wellendichtung mit einem abgestuften Metallgehäuse und einer mit diesem verbundenen elastischen Lippe bekannt. Der Außenumfang des Gehäuses weist hierbei einen geringfügig kleineren Durchmesser als die darüberhinausstehende statische Abdichtung auf. Die statische Abdichtung ist in diesem Fall einstückig mit der Dichtlippe verbunden und erstreckt sich über die gesamte axiale Höhe des abgestuften Gehäuseteiles, so daß eine relativ große Elastomermenge verschwendet wird.

Nachteilig ist ferner zu sehen, daß beim Einpressen der Wellendichtung (hohe Einpreßkraft) in eine Aufnahmebohrung das Elastomerteil der statischen Abdichtung sich ausschließlich axial in den mit der Dichtlippe verbundenen Bereich erstrecken kann. Die Folge daraus ist, daß die Wellendichtung, bedingt durch die Federrückstellkraft des Elastomermateriales, nicht exakt in der Aufnahmeboh-

- 2 -

rung positioniert werden kann, gegebenenfalls sogar wieder aus dieser herausgedrückt wird.

Darüberhinaus zeigt das deutsche Gebrauchsmuster 19 08 030 einen Wellendichtring mit winkelförmigem Gehäuse, auf dessen äußere Umfangsfläche ein aus elastischem und/oder plastischem Werkstoff bestehender Film aufgebracht ist. Der Film kann u.a. auch aus mehreren mit Abstand nebeneinanderliegenden ringförmigen Streifen bestehen. Der Film soll ferner wasser- und/oder öllöslich sein. Nachteilig ist hier zu sehen, daß beim Einpreßvorgang die einzelnen Streifen abgeschert werden und der gegebenenfalls noch verbleibende Rest bei Berührung mit dem Medium sich auflöst, so daß keine ausreichende statische Dichtheit in diesem Bereich erzielt werden kann.

Der Erfindung liegt somit die Aufgabe zugrunde, ausgehend von dem deutschen Gebrauchsmuster 18 27 236, eine Dichtung dahingehend zu verbessern, daß zum einen aus Kostengründen möglichst wenig Elastomermaterial verwendet wird bei gleichzeitig guten Abdichteigenschaften sowie exakter Positionierbarkeit bei geringstmöglichen Einpreßkräften.

Diese Aufgabe wird erfindungemäß dadurch gelöst, daß die statische Abdichtung aus mindestens einem separaten, mit dem abgestuften Gehäuseteil verbundenen Elastomerteil gebildet ist, welches mit axialem Abstand zur Stufe, unter Bildung eines Freiraumes, angeordnet ist. Durch

- 3 -

diese Maßgabe werden die Nachteile des Standes der Technik behoben.

Durch nur partiell angeordnetes Elastomermaterial tritt eine erhebliche Kostenersparnis, insbesondere bei Massenartikeln, ein. Ferner werden die Einpreßkräfte reduziert, da das Elastomermaterial in den zwischen sich und der Stufe gebildeten Freiraum ausweichen kann. Bedingt dadurch ist auch eine exakte Positionierung möglich, da keine beziehungsweise kaum noch axiale Rückstellkräfte vorhanden sind, die eine axiale Deplazierung bewerkstelligen könnten.

Zwecks weiterer Reduzierung der axialen Einpreßkraft wird vorgeschlagen, die statische Abdichtung im Querschnitt etwa halbkreisförmig auszubilden. Durch diese Maßnahme wird ein weicher Übergang bei Berührung mit der Aufnahmebohrung erzielt, der darüberhinaus auch dem Abscheren des Elastomermateriales vom abgestuften Gehäuseteil entgegenwirkt.

Einem weiteren Gedanken der Erfindung gemäß befindet sich die statische Abdichtung etwa auf halber axialer Höhe des abgestuften Bereiches. Somit kann das Elastomermaterial bei Verformung in beiden axialen Richtungen ausweichen. Die axiale Höhe zumindest der Grundfläche der statischen Abdichtung entspricht vorzugsweise etwa der halben Höhe des abgestuften Bereiches, wobei - in Abhängigkeit vom Anwendungsfall - auch andere Abmessungen denkbar sind.

Weiterhin wird vorgeschlagen, die statische Abdichtung aus einem an der Luft selbstaushärtendem nur teilver-

- 4 -

netzten Elastomermaterial herzustellen, welches dann vorzugsweise auf den abgestuften Gehäuseteil aufgespritzt wird, wobei das Volumen des über den Umfang (Innen- oder Außendurchmesser) des Gehäuses überstehenden Materiales geringer ist, als das Volumen des zwischen der statischen Abdichtung und der Stufe gebildeten Freiraumes.

Die Erfindung ist in der Zeichnung dargestellt und wird im folgenden näher beschrieben. Es zeigen:

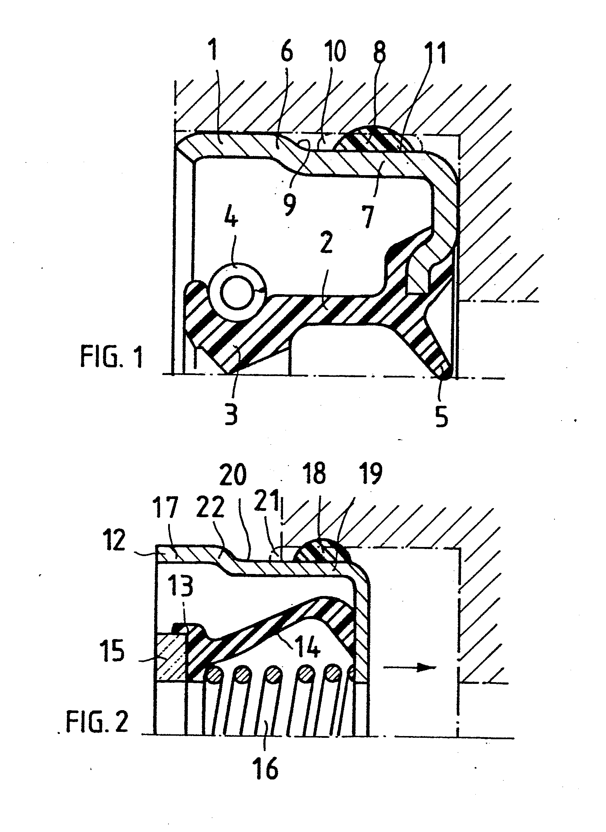

Figuren 1,2 statische Abdichtungen an unterschiedlich ausgebildeten Wellendichtungen im Querschnitt.

Figur 1 zeigt eine radial wirkende Wellen- oder Stangendichtung. Diese besteht aus einem winkelförmigen metallischen Gehäuse 1 sowie einem sich daran anschließenden Dichtbereich 2, der sich aus einer Hauptdichtlippe 3 mit Feder 4 und einer Zusatzlippe 5 zusammensetzt. Die Teile 1 und 2 sind einstückig durch Vulkanisation miteinander verbunden. Der Axialschenkel 6 des Gehäuses 1 ist abgestuft ausgebildet. Im abgestuften Bereich 7 ist eine umlaufende statische Abdichtung 8 vorgesehen, die aus einem nur teilvernetzten Elastomerteil gebildet ist. Die statische Abdichtung 8 wird vorzugsweise auf den abgestuften Bereich 7 aufgespritzt und weist einen etwa halbkreisförmigen Querschnitt auf, wobei sie vorzugsweise so angeordnet ist, daß zwischen ihr und der Stufe 9 ein Freiraum 10 gebildet wird. In bekannter Weise ragt die statische Abdichtung 8 radial über den Durchmesser des Gehäuseaxialschenkels 6 hinaus. Während des Einpreßvor-

- 5 -

ganges wird die statische Abdichtung verformt und erstreckt sich u.a. in den zwischen sich und der Stufe 9 gebildeten Freiraum 10. Der Axialschenkel 6, der üblicherweise als Preßsitz ausgeführt wird, gewährleistet die Haftsicherheit in der nur angedeuteten Aufnahmebohrung, während die statische Abdichtung 8 unter radialer Vorspannung, die Dichtheit sicherstellend, an der Umfangsfläche der Aufnahmebohrung anliegt. Die Abmessungsverhältnisse sind so gewählt, daß die Grundfläche 11 der statischen Abdichtung 8 etwa der halben axialen Höhe des abgestuften Teiles 7 entspricht und, daß das Volumen des radial über den Axialschenkel vorstehenden Elastomermateriales geringer ist als der zwischen der statischen Abdichtung 8 und der Stufe 9 gebildete Freiraum.

Figur 2 zeigt eine axial wirkende Wellendichtung (Gleitringdichtung), die ebenfalls aus einem winkelförmigen Gehäuse 12 und einem damit verbundenen Dichtbereich 13 besteht. Letzterer wird gebildet durch einen Balgen 14 der einen Gleitring 15 trägt. Axial zwischen Balgen 14 und Gehäuse 12 erstreckt sich eine Druckfeder 16. Der Axialschenkel 17 des Gehäuses 12 ist analog zur Figur 1 abgestuft ausgebildet. Die statische Abdichtung 18 ist hier im Endbereich 19 des abgestuften Bereichs 20 angeordnet und ragt radial über den Durchmesser des Axialschenkels 17 hinaus.

Beim Einpreßvorgang (Pfeil) wird das überstehende Elastomermaterial axial in den Freiraum 21 zwischen der statischen Abdichtung 18 und der Stufe 22 gedrückt.

Patentansprüche:

1. Dichtung, insbesondere eine radial oder axial wirkende Wellendichtung oder Stangendichtung, bestehend aus einem abgestuft ausgebildeten Gehäuse, einem damit verbundenen Dichtbereich sowie einer im Bereich des abgestuften Gehäuseteiles angeordneten statischen Abdichtung, die im Einbauzustand unter Vorspannung mit einem korrespondierenen Aufnahmekörper zusammenwirkt, dadurch gekennzeichnet, daß die statische Abdichtung (8,18) aus mindestens einem separaten, mit dem abgestuften Gehäuseteil (7,20) verbundenen Elastomerteil gebildet ist, welches mit axialem Abstand zur Stufe (9,22), unter Bildung eines Freiraumes (10,21), angeordnet ist.

2. Dichtung nach Anspruch 1, dadurch gekennzeichnet, daß die statische Abdichtung (8,18) einen etwa halbkreisförmigen Querschnitt aufweist.

3. Dichtung nach den Ansprüchen 1 und 2, dadurch gekennzeichnet, daß die statische Abdichtung (8) etwa auf halber axialer Höhe des abgestuften Gehäuseteiles (7) angeordnet ist.

4. Dichtung nach den Ansprüchen 1 bis 3, dadurch gekennzeichnet, daß die axiale Höhe der statischen Abdichtung (8) etwa der Hälfte der axialen Höhe des abgestuften Gehäuseteiles (7) entspricht.

5. Dichtung nach den Ansprüchen 1 bis 4, dadurch gekennzeichnet, daß die statische Abdichtung (8,18) aus einem nur teilvernetzten Elastomermaterial besteht.

6. Dichtung nach den Ansprüchen 1 bis 5, dadurch gekennzeichnet, daß das Elastomermaterial auf den abgestuften Gehäuseteil (7,20) aufgespritzt ist.

7. Dichtung nach den Ansprüchen 1 bis 6, dadurch gekennzeichnet, daß das Volumen des über den Umfang des Gehäuses (6,17) überstehenden Materiales geringer als der zwischen der statischen Dichtung (8,18) und der Stufe (9,22) gebildete Freiraum (10,21) ist.

FIG. 1

FIG. 2